# EUROPEAN PATENT SPECIFICATION

(11) **EP 2 842 196 B1**
(45) Date of publication and mention of the grant of the patent: **26.10.2016**
(21) Application number: 13790667.3
(22) Date of filing: 17.05.2013
(51) Int. Cl.: H01Q 1/36, H01Q 1/24, H01Q 5/357, H01Q 1/38

(54) **WIRELESS COMMUNICATION DEVICE WITH A MULTIBAND ANTENNA, AND METHODS OF MAKING AND USING THEREOF**
DRAHTLOSE KOMMUNIKATIONSVORRICHTUNG MIT EINER MULTIBAND-ANTENNE UND VERFAHREN ZUR HERSTELLUNG UND VERWENDUNG DAVON
DISPOSITIF DE COMMUNICATION SANS FIL À ANTENNE MULTIBANDE ET SES PROCÉDÉS DE FABRICATION ET D'UTILISATION

(30) Priority: 17.05.2012 US 201261648469 P; 05.09.2012 US 201213604521
(43) Date of publication of application: 04.03.2015
(73) Proprietor: Huawei Technologies Co., Ltd., Longgang District Shenzhen, Guangdong 518129 (CN)
(72) Inventor: VANJANI, Kiran, Shenzhen, Guangdong 518129 (CN); SHANMUGAM, Balamurugan, San Diego, California 92115 (US)
(74) Representative: Pfenning, Meinig & Partner mbB
(86) International application number: PCT/CN2013/075828
(87) International publication number: WO 2013/170784

(56) References cited:
- WO-A2-2004/032280
- JP-A- 2001 332 924
- US-A1- 2002 190 903
- US-A1- 2005 270 243
- US-A1- 2008 094 283
- US-A1- 2009 303 144

## Description

### TECHNICAL FIELD

The present disclosure relates to a device and method for wireless communications, and, in particular embodiments, to a wireless communication device with multiple-band antennas, and methods of making and using thereof.

### BACKGROUND

Wireless devices provide connections to multiple wireless networks in multiple and varied frequency bands by means of antenna(s). This requires multiband antennas that can be used in multiple frequency bands. An antenna is a medium for transmitting and receiving electromagnetic waves. These days' consumer wireless handheld devices are getting thinner and more compact; this in turn calls for a size reduction for most of the components including the antenna. On the other hand more and more communication protocols using different frequency bands are being added. As more frequency bands (larger bandwidths) need to be supported, a larger antenna volume is desired. As you can see both the statements above are contradicting and it is a challenge to satisfy all the requirements. However, achieving a wide low band bandwidth separately or in conjunction with an ultra wide high band has been very challenging if not impossible using a passive antenna in the past, especially in ultra slim and small portable wireless devices. Cellular portable devices available in the market today that cover a wide low band bandwidth generally use one of two approaches. One approach uses some type of active solution (e.g., radio frequency (RF) switch, tunable capacitors and so on) to tune the resonance frequency depending on the band usage at a given point. Disadvantages of this solution include added cost and complexity, more discrete components are required, increased complexity from a software perspective, and increased losses in the RF chain..

Another approach is to split the low band section into two antennas (e.g., one at the bottom and one at the top). The antenna at the bottom covers the 850/900 bands and the antenna at the top covers the 700 band). A disadvantage of this solution is that two antennas need more real estate in an already very crowded small portable device. Furthermore, the device is more expensive and complex from the point of having two separate radiators, feeding clips, matching components, coaxial cable, etc. Also, if one of the transmitting antennas is placed at the top of the handset, this might cause specific absorption rate (SAR) issues that may be very hard to resolve.

The published patent application US 2005/0270243 A1 discusses an antenna operable in a plurality of frequency bands. The antenna comprises first and second high band resonators, a resonating meanderline and a counterpoise. A ground return conductively couples on or more regions of the counterpoise to the meanderline. One or more of the first resonating element, the second resonating element and the resonating meanderline are coupled by magnetic and/or capacitive coupling to provide operation in the plurality of frequency bands.

Therefore, there is an opportunity to develop very wide bandwidth multiband internal antennas that are compact.

### SUMMARY

An embodiment antenna for a wireless device includes a conductive meander structure formed from a plurality of meanders; and a conductive strip connected in parallel to the meander structure and including a plurality of tabs projecting toward the meander structure, the plurality of tabs comprising a first group of tabs connected to a first group of said meanders corresponding to the first group of tabs, the plurality of tabs further comprising a second group of tabs disconnected from a second group of said meanders corresponding to the second group of tabs characterized in that a first meander in the second group of meanders is connected to a patch of the antenna, the patch is connected to a feed section of the antenna that is configured to receive a feed signal from a transceiver.

An embodiment wireless device includes a transceiver, a finite ground plane, and an antenna connected to the transceiver connected to the transceiver and to the finite ground plane as defined in the appended claims.

An embodiment method of forming a wireless device includes forming a meander structure with a plurality of meanders, forming a conductive strip having a plurality of tabs, and connecting the conductive strip to the meander structure in parallel, the tabs of the conductive strip projecting toward the meander structure such that a first group of tabs is connected to a first group of meanders corresponding to the first group of tabs and a second group of tabs is disconnected from a second group of meanders corresponding to the second group of tabs; the method further comprising coupling a feed section to one end of the meander structure and a ground section to an opposing end of the meander structure; the method further comprising separating the feed section and the ground section with a slot occupied by an insulator; the method further comprising coupling a patch to a first meander of the meander structure and an end of the feed section proximate the first meander.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates a module layout for an embodiment wireless device;
Figure 2 illustrates an alternative module layout for an embodiment wireless device;
Figure 3 illustrates an embodiment antenna aligned with a full metal frame;
Figure 4 illustrates a location of slots formed between the antenna and full metal frame of Figure 3 and between a feed section and a ground section of the antenna;
Figure 5 illustrates a return loss plot for the antenna of Figure 3;
Figure 6 illustrates low band antenna efficiency for the antenna of Figure 3;
Figure 7 illustrates high band antenna efficiency for the antenna of Figure 3;
Figure 8 illustrates a second embodiment antenna aligned with and supported by a plastic antenna carrier;
Figure 9 illustrates a return loss plot for the antenna of Figure 8;
Figure 10 illustrates a plot of voltage standing wave ratio (VSWR) vs. operating frequency for the antenna of Figure 8;
Figure 11 illustrates low band antenna efficiency for the antenna of Figure 8;
Figure 12 illustrates high band antenna efficiency for the antenna of Figure 8;
Figure 13 illustrates a square wave pattern for a meander structure from the antenna of Figure 3;
Figure 14 illustrates a sine wave pattern for a meander structure from the antenna of Figure 3; and
Figure 15 illustrates an embodiment antenna oriented relative to a finite ground plane and an antenna ground clearance.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present disclosure provides many applicable inventive concepts that can be embodied in a wide variety of specific contexts. The specific embodiments discussed are merely illustrative and do not limit the scope of the disclosure.

An embodiment includes multiband antennas for electronic devices, such as portable wireless communication devices. An embodiment wideband/broadband antenna design provides coverage from 690MHz-960MHz over the various communication protocols such as: LTE Band XVII, Band XIII, GSM850, GSM900, UMTS Band5, Band XII, Band8 for the low bands, as well as 1700MHz-3000MHz (LTE Band IV, Band2/1/4/41, DCS1800, PCS1900) or 1400MHz to 2700MHz (Band XI, Band 41) for the high bands, depending on the mode of antenna optimization and tuning. While specific frequency bands are listed because they are being used currently for wireless communications, embodiments are not in any way limited to only these bands, and any other bands that are implemented by these or other standards or devices are within the scope of various embodiments.

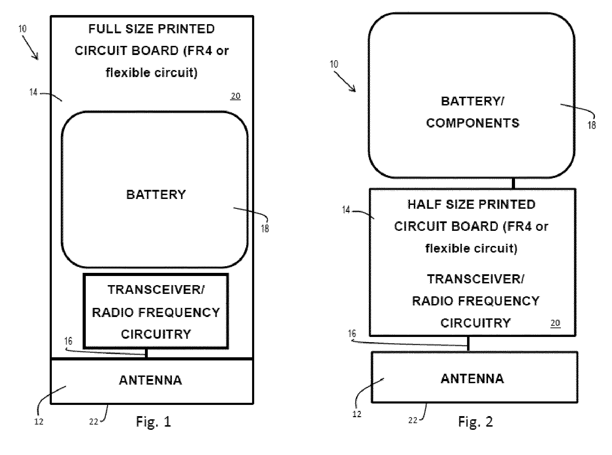

Referring now to Figure 1, a module layout for an embodiment wireless device 10 having a multiband wideband antenna 12 is shown. In an embodiment, the antenna 12 is coupled to a full size printed circuit board 14 using a transmission line 16. Multiple multiband antennae may be connected to this circuit board via separate transmission lines. The circuit board 14 may be formed using a fiberglass reinforced epoxy (FR4), polyimide, and so on. This circuit board may have multiple layers and one of the layers will serve as the reference ground plane for the PCB. As shown, the circuit board 14 may include a transceiver, LCD, camera modules, and other radio frequency (RF) circuitry. In an embodiment, the feed section of the antenna 12 is connected to a Front End Module, a transceiver, and/or matching circuitry on the circuit board 14 by means of a coaxial cable or transmission line 16. The circuit board 14 is also coupled to a battery and/or other wireless device components 18. In an embodiment, a ground leg for the antenna 12, which is hidden beneath the antenna 12 in Figure 1, is connected to the finite ground plane of the printed circuit board 14, either directly or indirectly.

As shown in Figure 1, the antenna 12 may be disposed proximate a bottom 22 of the wireless device 10 and the circuit board 14 may be approximately the size of the wireless device 10. In this configuration, the battery and other components 18 are placed on the circuit board 14. However, the various components and devices of the wireless device 10 may be otherwise located in other embodiments. For example, an alternative module layout for the wireless device 10 is shown in Figure 2. In Figure 2, the battery and other components 18 and a half size printed circuit board 14 layout has been illustrated.

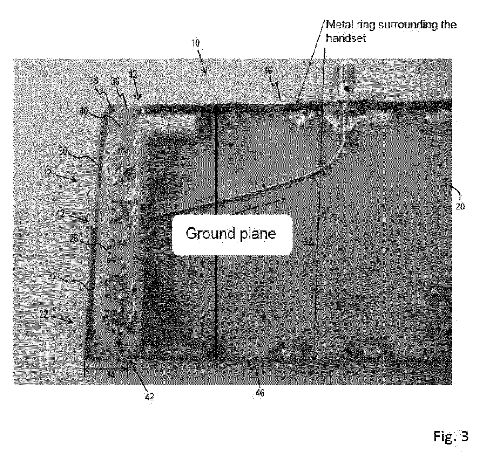

Referring now to Figure 3, a representative portion of an embodiment wireless device 10 (with the battery/components 18 removed) is illustrated. This embodiment illustrates how this antenna design can be incorporated into a wireless device with a complete metal ring surrounding it. The representative portion of the wireless device 10 depicts the antenna 12 of Figures 1-2 in greater detail. As shown, the antenna 12 includes a meander structure 26 of any shape, e.g., square or sine wave, connected in parallel to a conductive strip 28. As used herein, parallel includes both parallel and substantially parallel. The antenna 12 generally includes a feed section 30, and a ground section 32, which is coupled to the ground plane of the PCB 14. As shown, the feed section 30 and the ground section 32 are generally coupled to opposing ends of the antenna 12. The feed and ground sections can be swapped.

In an embodiment, the feed section 30 is coupled to the meander structure 26 at one end of the antenna 12 and the ground section 32 is coupled to the conductive strip 28 at an opposing end of the antenna 12. In an embodiment, a ground clearance 34 of the antenna 12, which is measured from a peripheral end of the ground plane 20 to the periphery of the feed and ground sections 30, 32 as shown in Figure 3, is ten millimeters (10 mm). However, this value may be higher or lower in other embodiments.

The meander structure 26 and the conductive strip 28 of the antenna 12 are placed very close to each other to increase electro-magnetic coupling. This coupling helps in making the antenna 12 resonate at a particular frequency. In an embodiment, a patch 36 is placed on the feed arm 38 of the feed section 30 of the antenna 12, making the design asymmetric. The placing of the patch 36 on the feed arm 38 of the feed section 30 helps in considerably widening the low band bandwidth of the antenna 12. Indeed, the patch 36 creates very strong electro-magnetic coupling between a first meander 40 (e.g., the first U-shape in the meander structure 26) and the feed arm 38.

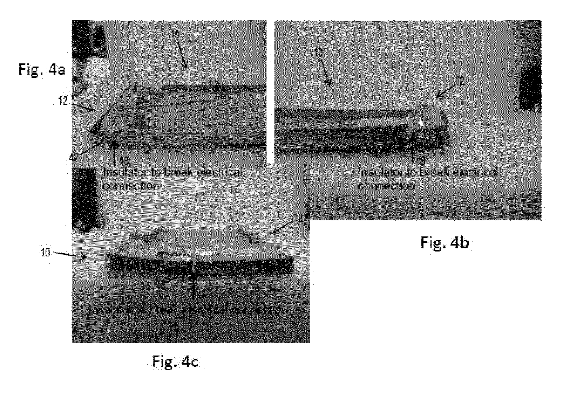

Still referring to Figure 3, the wireless device 10 can include a full PCB used in conjunction with the antenna 12. This PCB might be single layer or multiple layers. One of the layers will serve as the reference finite ground plane for the antenna. The PCB is generally aligned with the feed and ground sections 30, 32 of the antenna 12 depicted in Figure 3. The ground section/leg of the antenna is connected to the finite ground plane directly of indirectly. In an embodiment as shown in Figures 4a-4c, the wireless device 10 includes or forms three slots 42. Two of the slots 42, which are symmetrical, are disposed on opposing sides 46 of the wireless device 10. The other slot 42 is disposed at the bottom 22 and in the middle of the wireless device 10. In an embodiment, the slots 42 may be otherwise located or formed. In addition, more or fewer slots 42 may be used in other embodiments. As shown in Figures 4a-4c, an insulator 48 (e.g., a plastic block, etc.) is used to break electrical connection at the slots 48.

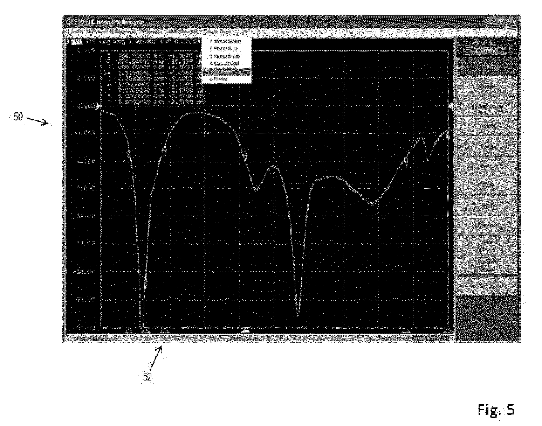

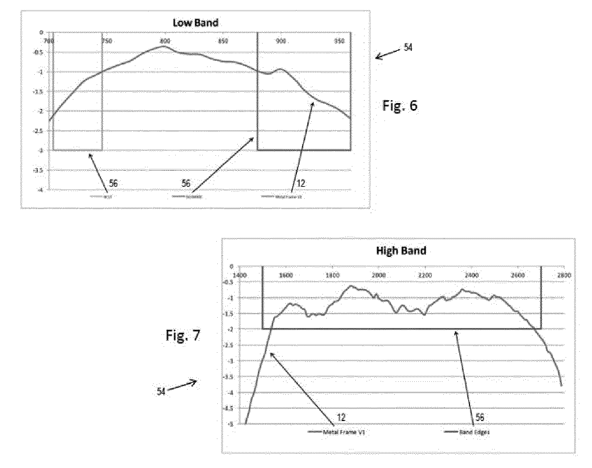

Referring now to Figure 5, a return loss plot 50 for the antenna 12 of Figure 3 is graphically illustrated. As shown, the frequency range 52 (along the horizontal axis) covered for low band is in a range of about 690 MHz to about 960 MHz and for high band is in a range of about 1500 to about 2700 MHz (or 3 GHz). Thus, the antenna concept 12 shown in Figure 3 can support communications in a plurality of frequency bands. Figure 6 illustrates low band antenna efficiency 54 of the embodiment antenna 12 of Figure 3. By looking at the band edges 56 one can say that efficient antenna performance for the desired frequency of operation is obtained. Figure 7 illustrates high band antenna efficiency 54 for the embodiment antenna 12 of Figure 3. By looking at the band edges 56 one can say that efficient antenna performance for the desired frequency of operation is obtained.

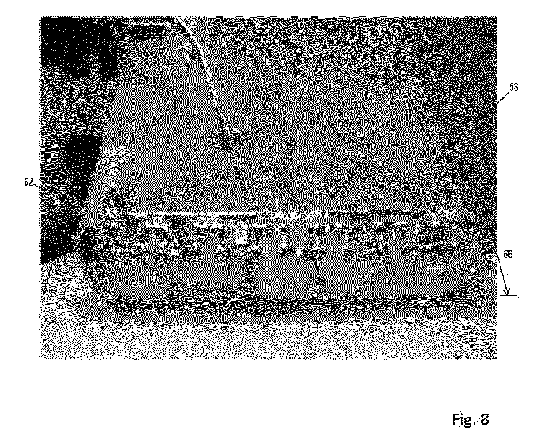

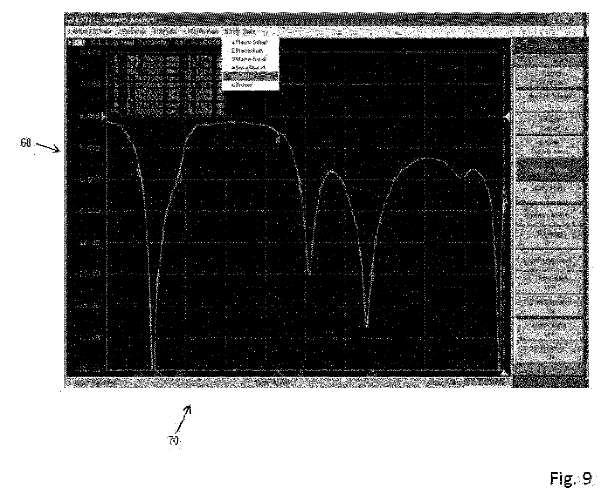

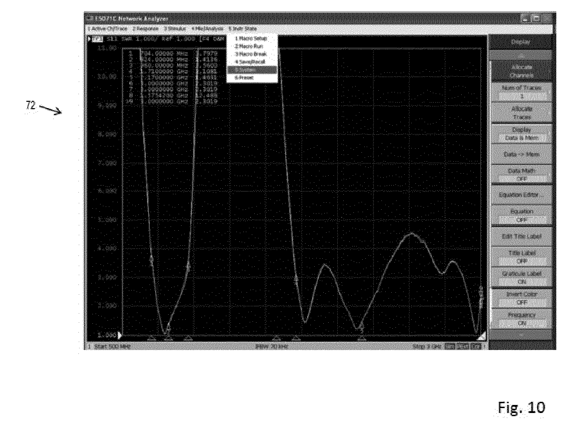

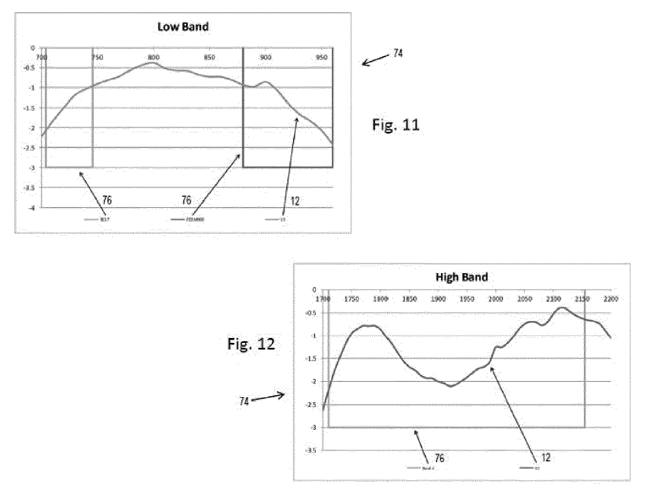

Referring now to Figure 8, an embodiment wireless device 58 having a plastic (e.g., polycarbonate/ acrylonitrile butadiene styrene (PC/ABS)) frame 60 around or supporting the antenna 12 is illustrated. This embodiment illustrates how this antenna design can be incorporated into a wireless device with a polycarbonate/ acrylonitrile butadiene styrene (PC/ABS) frame surrounding it. In an embodiment, the PCB/finite ground plane has a length 62 of about 129 mm and a width 64 of about 64 mm. Even so, in other embodiments the PCB supported by the frame 60 may have larger or smaller dimensions. In an embodiment, a ground clearance 66 of the antenna 12 is 10 mm. However, this value may be higher or lower in other embodiments. As shown, the wireless device 58 shares many of the same features and structures of the wireless device 10 and, therefore, those items have not been described again in detail. Referring now to Figure 9, a return loss plot 68 for the antenna 12 of Figure 8 is graphically illustrated. As shown, the frequency range 70 covered for low band is in a range of about 690 MHz to about 960 MHz and for high band is in a range of about 1700 to about 2300 MHz. Thus, the antenna concept 12 shown in Figure 3 can support communications in a plurality of frequency bands. Figure 10 illustrates a voltage standing wave ratio (VSWR) 72 for the antenna 12 of Figure 8. In addition, Figure 11 illustrates low band antenna efficiency 74 for the embodiment antenna 12 of Figure 8. By looking at the band edges76 one can say that efficient antenna performance for the desired frequency of operation is obtained for antenna 12 operating with the plastic frame 60 in the embodiment wireless device 58 of Figure 8. Figure 12 illustrates high band antenna efficiency 74 for the embodiment antenna 12 of Figure 8. By looking at the band edges74 one can say that efficient antenna performance for the desired frequency of operation is obtained for antenna 12 operating with the plastic frame 60 in the embodiment wireless device 58 of Figure 8.

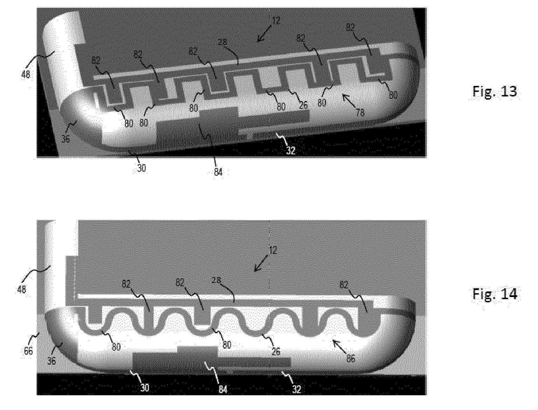

Referring now to Figure 13, an embodiment antenna 12 with a square wave pattern 78 is illustrated. As shown, the antenna 12 includes the meander structure 26 and the conductive strip 28. The meander structure 26 includes six individual square wave-shaped meanders 80 joined together to form a continuous, uninterrupted path. However, more or fewer of the meanders 80 may be formed in other embodiments depending on desired frequency of operation. The conductive strip 28 includes five tabs 82 extending toward, and at times coupled to, the meander structure 26. More or fewer of the tabs 82, which may or may not be connected to the meander structure 26, may be formed in other embodiments.

In an embodiment, a first tab 82 (from left to right) projects into, but is not connected to, a first meander 80, a second tab 82 is connected to a left leg of a second meander 80, a third tab 82 projects into, but is not connected to a third meander 80, a fourth tab 82 projects into and is connected to a bottom of a fifth meander 80, and a fifth tab 82 is connected to a right leg of a sixth meander 80. In an embodiment, a fourth meander 80 is unfilled with any of the tabs 82. As shown, the second tab 82 is narrower than, for example, the first and third tabs 82. In other embodiments, different configurations may be employed for the antenna 12.

In an embodiment, a tuning structure 84 is coupled to the feed section 30 as shown in Figure 13. The tuning structure 84 may be used to help the antenna 12 resonate at a desired or particular frequency.

Figure 14 illustrates an embodiment antenna 12 having a sine wave meander pattern 86. As shown, the antenna 12 includes the meander structure 26 and the conductive strip 28. The meander structure 26 includes six individual U-shaped meanders 80, each of which has a rounded bottom. However, more or fewer of the meanders 80 may be formed in other embodiments. The conductive strip 28 includes five tabs 82 extending toward, and at times coupled to, the meander structure 26. More or fewer of the tabs 82, which may or may not be connected to the meander structure 26, may be formed in other embodiments.

In an embodiment, a first tab 82 (from left to right) projects into, but is not connected to, a first meander 80, a second tab 82 is connected to a bottom of a second meander 80, a third tab 82 projects into, but is not connected to a third meander 80, a fourth tab 82 projects into and is connected to a bottom of a fifth meander 80, and a fifth tab 82 is connected to a right leg of a sixth meander 80. In an embodiment, a fourth meander 80 is unfilled with one of the tabs 82. As shown, the second tab 82 is narrower than, for example, the first and third tabs 82. In other embodiments, different configurations may be employed for the antenna 12.

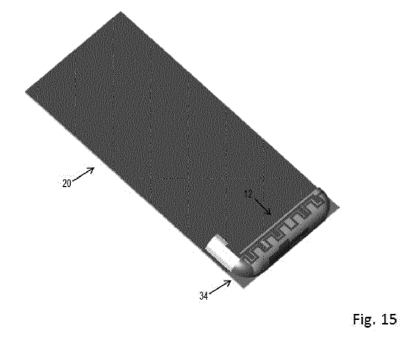

Figure 15 illustrates an embodiment antenna 12, the finite ground plane 20, and the antenna ground clearance 34 disposed at an end of the finite ground plane 20 below the antenna 12.

From the foregoing, it should be recognized that an embodiment ultra wideband multiband antenna incorporates both low band and high band broad banding techniques. An embodiment antenna provides ultra wide bandwidth in a compact antenna volume. An embodiment device has one antenna providing coverage for, e.g., eight or nine cellular bands of operation without any increase in antenna volume, when real estate comes at a very high price in today's slim/compact wireless devices.

An embodiment antenna has enhanced low and high bandwidth that translates directly into cost savings per device, reduced number of stock-keeping units (SKUs), etc. An embodiment does not increase cost or software complexity, as the performance is achieved by a true passive solution. An embodiment provides significant cost savings over existing active solutions in the market. In an embodiment, the location of the antenna in a device provides a low risk of SAR.

Embodiments may be applied to wireless communication devices that have multiband operation, such as but not limited to cell phones, tablets, net books, laptops, e-readers, etc. Embodiments may be applied to electronic devices that use one or more antennas, such as a mobile terminal, infrastructure equipment, GPS navigation devices, desktop computers, etc.

In a comparison of embodiment antennas with a typical prior art device, the prior art device has a narrow low band bandwidth with the same antenna volume (dimensions): 140MHz coverage (824MHz - 960MHz), for GSM850/EGSM900. The high band bandwidth realized is 1710MHz - 2170MHz, for DCS1800/PCS1900/Band I/AWS. Multiple SKUs/antenna versions, e.g., U.S, E.U, Japan, are required for different versions of the handset because the antennas are bandwidth limited. An active matching network is required, which increases cost and complexity from both hardware and software points of view. Two antennas may be required to cover the required frequency bands. This also increases cost and real estate on a PCB.

In contrast, in an embodiment, wide low band bandwidth is provided without any increase in antenna volume (dimensions): 270MHz coverage (690MHz - 960MHz), for GSM850/EGSM900/Band 17. The wide high band bandwidth realized is 1500MHz - 3000MHz. In an embodiment, one antenna design can be optimized to cover all the bands required. There is no need for an active matching network, which keeps the front end simple and provides a large cost reduction.

## Claims

1. An antenna (12) for a wireless device, comprising:
a conductive meander structure (26) formed from a plurality of meanders (80); and
a conductive strip (28) connected in parallel to the meander structure (26) and including a plurality of tabs (82) projecting toward the meander structure (26), the plurality of tabs (82) comprising a first group of tabs (82) connected to a first group of said meanders (80) corresponding to the first group of tabs (82), the plurality of tabs (82) further comprising a second group of tabs (82) disconnected from a second group of said meanders (80) corresponding to the second group of tabs (82).
**characterized in that**
a first meander (80) in the second group of meanders (80) is connected to a patch (36) of the antenna (12), wherein the patch (36) is connected to a feed section (30) of the antenna (12) that is configured to receive a feed signal from a transceiver.

2. The antenna (12) of claim 1, wherein a first meander (80) in the first group of meanders is connected to a ground section (32) of the antenna, the ground section (32) configured to connect to a ground plane.

3. The antenna (12) of claim 1, wherein the plurality of meanders (80) collectively form at least one of a square wave pattern and a sine wave pattern.

4. The antenna (12) of claim 1, wherein at least one of the tabs (82) in the first group of tabs (82) is connected to at least one of a sidewall of one of the first group of meanders (80) and a bottom of one of the first group of the meanders (80).

5. The antenna (12) of claim 1, wherein the meander structure (26) and the conductive strip (28) are each supported by an antenna carrier, the antenna carrier formed from a non-metallic material.

6. A wireless device (10) comprising:
the antenna (12) of claim 2; a transceiver;
a finite ground plane; and
the antenna (12) connected to the transceiver through the feed section (30) of the antenna (12) and to the finite ground plane through the ground section (32) of the antenna (12).

7. The device (10) of claim 6, wherein the meander structure (26) forms at least one of a square wave pattern and a sine wave pattern.

8. A method of forming an antenna (12) for a wireless device (10), comprising:
forming a conductive meander structure (26) with a plurality of meanders (80);
forming a conductive strip (28) having a plurality of tabs (82); and
connecting the conductive strip (28) to the meander structure in parallel, the tabs (82) of the conductive strip (28) projecting toward the meander structure (26) such that a first group of tabs (82) is connected to a first group of meanders (80) corresponding to the first group of tabs (82) and a second group of tabs (82) is disconnected from a second group of meanders (80) corresponding to the second group of tabs (82);
the method further comprising coupling a feed section (30) to one end of the meander structure (28) and a ground section (32) to an opposing end of the meander structure (28);
the method further comprising separating the feed section (30) and the ground section (32) with a slot (42) occupied by an insulator (48);
the method **characterized by** coupling a patch (36) to a first meander (80) of the meander structure (28) and an end of the feed section (30) proximate the first meander (80).

## Patentansprüche

1. Antenne (12) für eine drahtlose Vorrichtung, aufweisend:
eine leitende Mäanderstruktur (26) gebildet aus mehreren Mäandern (80); und
einen leitenden Streifen (28), der zu der Mäanderstruktur (26) parallel geschaltet ist und mehrere Laschen (82) aufweist, die zu der Mäanderstruktur (26) vorstehen, wobei die mehreren Laschen (82) eine erste Gruppe von Laschen (82) aufweisen, die mit einer ersten Gruppe von den Mäandern (80) verbunden ist, die der ersten Gruppe von Laschen (82) entspricht, und die mehreren Laschen (82) ferner eine zweite Gruppe von Laschen (82) aufweisen, die von einer zweiten Gruppe von den Mäandern (80) getrennt ist, die der zweiten Gruppe von Laschen (82) entspricht,
**dadurch gekennzeichnet, dass**
ein erster Mäander (80) in der zweiten Gruppe von Mäandern (80) mit einem Patch (36) der Antenne (12) verbunden ist, wobei das Patch (36) mit einem Einspeisungsabschnitt (30) der Antenne (12) verbunden ist, der konfiguriert ist, ein Einspeisungssignal von einem Transceiver zu empfangen.

2. Antenne (12) nach Anspruch 1, wobei ein erster Mäander (80) in der ersten Gruppe von Mäandern mit einem Masseabschnitt (32) der Antenne verbunden ist und der Masseabschnitt (32) konfiguriert ist, mit einer Masseebene zu verbinden.

3. Antenne (12) nach Anspruch 1, wobei die mehreren Mäander (80) gemeinsam ein Rechteckwellenmuster und/oder ein Sinuswellenmuster bilden.

4. Antenne (12) nach Anspruch 1, wobei mindestens eine von den Laschen (82) in der ersten Gruppe von Laschen (82) mit einer Seitenwand von einem der ersten Gruppe von Mäandern (80) und/oder einer Unterseite von einem der ersten Gruppe von Mäandern (80) verbunden ist.

5. Antenne (12) nach Anspruch 1, wobei die Mäanderstruktur (26) und der leitende Streifen (28) jeweils durch einen Antennenträger getragen werden, wobei der Antennenträger aus einem nichtmetallischen Werkstoff gebildet ist.

6. Drahtlose Vorrichtung (10), aufweisend:
die Antenne (12) nach Anspruch 2;
einen Transceiver;
eine endliche Masseebene; und
wobei die Antenne (12) mit dem Transceiver durch den Einspeisungsabschnitt (30) der Antenne (12) und zu der endlichen Masseebene durch den Masseabschnitt (32) der Antenne (12) verbunden ist.

7. Vorrichtung (10) nach Anspruch 6, wobei die Mäanderstruktur (26) ein Rechteckwellenmuster und/oder ein Sinuswellenmuster bildet.

8. Verfahren zum Bilden einer Antenne (12) für eine drahtlose Vorrichtung (10), aufweisend:
Bilden einer leitenden Mäanderstruktur (26) mit mehreren Mäandern (80);
Bilden eines leitenden Streifens (28) mit mehreren Laschen (82); und
paralleles Verbinden des leitenden Streifens (28) mit der Mäanderstruktur, wobei die Laschen (82) des leitenden Streifens (28) zu der Mäanderstruktur (26) derart vorstehen, dass eine erste Gruppe von Laschen (82) mit einer ersten Gruppe von Mäandern (80) verbunden ist, die der ersten Gruppe von Laschen (82) entspricht, und eine zweite Gruppe von Laschen (82) von einer zweiten Gruppe von Mäandern (80) getrennt ist, die der zweiten Gruppe von Laschen (82) entspricht;
wobei das Verfahren ferner das Koppeln eines Einspeisungsabschnitts (30) mit einem Ende der Mäanderstruktur (28) und eines Masseabschnitts (32) mit einem gegenüberliegenden Ende der Mäanderstruktur (28) aufweist;
wobei das Verfahren ferner das Trennen des Einspeisungsabschnitts (30) und des Masseabschnitts (32) mit einem Schlitz (42) aufweist, der durch einen Isolator (48) besetzt ist;
wobei das Verfahren durch Koppeln eines Patches (36) mit einem ersten Mäander (80) der Mäanderstruktur (28) und einem Ende des Einspeisungsabschnitts (30) nahe des ersten Mäanders (80) charakterisiert ist.

## Revendications

1. Antenne (12) destinée à un dispositif sans fil, comprenant :
une structure de méandres conductrice (26) formée à partir d'une pluralité de méandres (80) ; et
une bande conductrice (28) reliée en parallèle à la structure de méandres (26) et contenant une pluralité de languettes (82) se projetant en direction de la structure de méandres (26), la pluralité de languettes (82) comprenant un premier groupe de languettes (82) relié à un premier groupe desdits méandres (80) correspondant au premier groupe de languettes (82), la pluralité de languettes (82) comprenant également un deuxième groupe de languettes (82) déconnecté d'un deuxième groupe desdits méandres (80) correspondant au deuxième groupe de languettes (82),
**caractérisée en ce**
**qu'**un premier méandre (80) du deuxième groupe de méandres (80) est relié à une plaque (36) de l'antenne (12), la plaque (36) étant reliée à une section d'alimentation (30) de l'antenne (12) qui est configurée pour recevoir un signal d'alimentation d'un émetteur/récepteur.

2. Antenne (12) selon la revendication 1, dans laquelle un premier méandre (80) du premier groupe de méandres est relié à une section de masse (32) de l'antenne, la section de masse (32) étant configurée pour être reliée à un plan de masse.

3. Antenne (12) selon la revendication 1, dans laquelle la pluralité de méandres (80) forment collectivement un motif d'onde carrée et/ou un motif d'onde sinusoïdale.

4. Antenne (12) selon la revendication 1, dans laquelle au moins une des languettes (82) du premier groupe de languettes (82) est reliée à une paroi latérale d'un méandre du premier groupe de méandres (80) et/ou une partie inférieure d'un méandre du premier groupe de méandres (80).

5. Antenne (12) selon la revendication 1, dans laquelle la structure de méandres (26) et la bande conductrice (28) sont supportées chacune par un support d'antenne, le support d'antenne étant formé dans un matériau non métallique.

6. Dispositif sans fil (10) comprenant :
l'antenne (12) selon la revendication 2;
un émetteur/récepteur ;
un plan de masse fini ; et
l'antenne (12) reliée à l'émetteur/récepteur par la section d'alimentation (30) de l'antenne (12) et au plan de masse fini par la section de masse (32) de l'antenne (12).

7. Dispositif sans fil (10) selon la revendication 6, dans lequel la structure de méandres (26) forme un motif d'onde carrée et/ou un motif d'onde sinusoïdale.

8. Procédé de formation d'une antenne (12) destinée à un dispositif sans fil (10), comprenant les étapes consistant à :
former une structure de méandres conductrice (26) ayant une pluralité de méandres (80) ;
former une bande conductrice (28) ayant une pluralité de languettes (82) ; et
relier la bande conductrice (28) à la structure de méandres en parallèle, les languettes (82) de la bande conductrice (28) se projetant en direction de la structure de méandres (26) de telle façon qu'un premier groupe de languettes (82) soit relié à un premier groupe de méandres (80) correspondant au premier groupe de languettes (82) et qu'un deuxième groupe de languettes (82) soit déconnecté d'un deuxième groupe de méandres (80) correspondant au deuxième groupe de languettes (82) ;
le procédé comprenant également le couplage d'une section d'alimentation (30) à une extrémité de la structure de méandres (28) et d'une section de masse (32) à une extrémité opposée de la structure de méandres (28) ;
le procédé comprenant également la séparation de la section d'alimentation (30) de la section de masse (32) au moyen d'une fente (42) occupée par un isolant (48) ;
le procédé étant **caractérisé par** le couplage d'une plaque (36) à un premier méandre (80) de la structure de méandres (28) et à une extrémité de la section d'alimentation (30) proche du premier méandre (80).
